# EUROPEAN PATENT APPLICATION

(11) **EP 2 498 452 A1**
(43) Date of publication of application: **12.09.2012**
(21) Application number: 10827838.3
(22) Date of filing: 21.07.2010
(51) Int. Cl.: H04L 12/56

(54) **CLIENT TERMINAL INTERFACE MACHINE, SERVICE TERMINAL INTERFACE MACHINE, AND MESSAGE PROCESSING METHOD AND SYSTEM THEREOF**

(30) Priority: 03.11.2009 CN 200910109976
(71) Applicant: ZTE Corporation, Shenzhen, Guangdong 518057 (CN)
(72) Inventor: MO, Zehan, Shenzhen Guangdong 518057 (CN)
(74) Representative: Molnia, David
(86) International application number: PCT/CN2010/075371
(87) International publication number: WO 2011/054224

(57) **Abstract**

The present invention discloses a client end interface machine, a server end interface machine, and method and system for processing a message thereof. The method comprises: setting a current remaining processing capacity value of a server end interface machine, each time when a synchronization response message returned by the server end interface machine is received, writing a remaining processing capacity of the server end interface machine carried in the synchronization response message into the current remaining processing capacity value of the server end interface machine; when receiving a rejection message from the server end interface machine, setting the current remaining processing capacity value of the server end interface machine to be zero; when the current remaining processing capacity value of the server end interface machine is greater than zero, the client end interface machine sending a synchronization message to the server end interface machine, and subtracting one from the current remaining processing capacity value of the server end interface machine. The method can perform message synchronization processing based on the current remaining processing capacity, therefore the message synchronization and the message processing speed can be matched effectively, and congestion or overflow of the interface can be prevented.

## Description

### Field of the Invention

The present invention relates to the field of a computer application system, and in particular to a client end interface machine, a server end interface machine, and a method and a system for processing a message thereof.

### Background of the Invention

At present, large enterprises have multiple sets of different computer application systems. Data exchange between the different application systems is generally realized by an interface, for example, message synchronization based on events can be performed between two systems with interfaces there between. However, there always exists a problem of unmatched processing speeds between the interfaces. When a message transfer speed of one party of the interface is greater than a processing speed of another party of the interface, congestion of the interface may be generated; on the other hand, if the message transfer speed of one party of the interface is lower than the processing speed of another party of the interface, overflow of the interface may be generated. There is no proper solution for the problem in the prior art.

### Summary of the Invention

In view of the above, the present invention provides a client end interface machine, a server end interface machine, and a method and a system for processing a message thereof, which can properly implement the flow control between the interfaces, match the processing speeds on two ends of the interface, and prevent the congestion or overflow of the interfaces.

In order to solve the above technical problem, the present invention adopts the following technical solutions.

The present invention provides a method for processing a synchronization message of a client end interface machine, comprising:
setting a current remaining processing capacity value of a server end interface machine; each time when receiving a synchronization response message returned by the server end interface machine, writing a remaining processing capacity of the server end interface machine carried in the synchronization response message into the current remaining processing capacity value of the server end interface machine; when receiving a rejection message from the server end interface machine, setting the current remaining processing capacity value of the server end interface machine to be zero;
when the current remaining processing capacity value of the server end interface machine is greater than zero, the client end interface machine sending a synchronization message to the server end interface machine, and subtracting one from the current remaining processing capacity value of the server end interface machine.

In an embodiment of the method, the method further comprises: the client end interface machine putting the synchronization message being rejected into a resending queue to wait for resending.

The present invention also provides a client end interface machine, the client end interface machine comprises a server end interface machine current remaining processing capacity value setting module and a synchronization message sending module; wherein,
the server end interface machine current remaining processing capacity value setting module is configured to write, each time when receiving a synchronization response message returned by the server end interface machine, a remaining processing capacity of the server end interface machine carried in the synchronization response message into a current remaining processing capacity value of the server end interface machine, and set the current remaining processing capacity value of the server end interface machine to be zero when receiving a rejection message from the server end interface machine;
the synchronization message sending module is configured to, when the current remaining processing capacity value of the server end interface machine is greater than one, send a synchronization message to the server end interface machine and subtract one from the current remaining processing capacity value of the server end interface machine.

The present invention also provides a method for processing a synchronization message of a server end interface machine, characterized by comprising:
judging, when receiving a synchronization message from the client end interface machine, whether a last-calculated remaining processing capacity is greater than zero; if the last-calculated remaining processing capacity is greater than zero, subtracting one from the last-calculated remaining processing capacity, and writing the received synchronization message into a message queue; otherwise, the server end interface machine returning a rejection message to the client end interface machine;
sending the synchronization message in the message queue to a service processor for processing, and writing a processing result returned by the service processor into the message queue; updating the last-calculated remaining processing capacity, and returning a synchronization response message which carries the updated last-calculated remaining processing capacity to the client end interface machine.

In an embodiment of the above method, the step of writing the received synchronization message into the message queue comprises:
traversing the message queue, recording, during the traversing, a minimum message response time of a processed message and a queue position corresponding to the processed message;
writing, when finding that there exists an idle position in the message queue, the received synchronization message into the idle position, and ending a current flow;
if no idle position is found after completing the traversing of the message queue, writing the received synchronization message into the queue position corresponding to the processed message with the minimum message response time.

In an embodiment of the above method, the step of updating the last-calculated remaining processing capacity comprises:
judging whether it is needed to recalculate the remaining processing capacity according to whether a difference between a current system time and a time of the last-calculated remaining processing capacity is greater than a preset time interval;
if the difference is greater than the preset time interval, judging that it is needed to recalculate the remaining processing capacity, then recalculating the remaining processing capacity, taking the recalculated remaining processing capacity as the updated last-calculated remaining processing capacity, and updating the time of the last-calculated remaining processing capacity as the current system time;
if the difference is smaller than or equal to the preset time interval, judging that it is not needed to recalculate the remaining processing capacity, and adding one to the last-calculated remaining processing capacity as the updated last-calculated remaining processing capacity.

In an embodiment of the above method, the step of calculating the remaining processing capacity comprises:
calculating an average waiting time and an average processing time, wherein, the average waiting time is obtained by dividing a total waiting time of messages whose responses are not returned by the number of the messages whose responses are not returned; and the average processing time is obtained by dividing a total processing time of messages whose responses are returned by the number of the messages whose responses are returned;
according to L=MaxUnproceedTime×2/ (AxT2+ (2-A) ×T1), calculating a current processing capacity; wherein L is the current processing capacity, MaxUnproceedTime is a maximum unprocessed capacity, T1 is the average waiting time, T2 is the average processing time, and A is a weighted value of the average waiting time and the average processing time;
acquiring the remaining processing capacity according to the difference between the current processing capacity and the number of the messages whose responses are not returned.

In an embodiment of the above method, when calculating the current processing capacity, the method further comprises: setting a minimum unprocessed queue length;
setting the current processing capacity to be the minimum unprocessed queue length when the current processing capacity is smaller than the minimum unprocessed queue length.

In an embodiment of the above method, when calculating the current processing capacity, the method further comprises: setting a maximum unprocessed queue length;
setting the current processing capacity to be the maximum unprocessed queue length when the current processing capacity is greater than the maximum unprocessed queue length.

The present invention also provides a server end interface machine, the server end interface machine comprises a remaining processing capacity handling module and a synchronization response message sending module, wherein,
the remaining processing capacity handling module is configured to judge whether a last-calculated remaining processing capacity is greater than zero when receiving the synchronization message from a client end interface machine; when the last-calculated remaining processing capacity is greater than zero, subtract one from the last-calculated remaining processing capacity and write the received synchronization message into a message queue; when the last-calculated remaining processing capacity is smaller than or equal to zero, return a rejection message to the client end interface machine;
the synchronization response message sending module is configured to send the synchronization message in the message queue to a service processor for processing, and write a processing result returned by the service processor into the message queue, update the last-calculated remaining processing capacity, and return a synchronization response message which carries the updated last-calculated remaining processing capacity to the client end interface machine.

The present invention also provides a method for processing a synchronization message between interfaces, the method comprises:
a first interface machine judging whether a current remaining processing capacity value of a second interface machine is greater than zero, when the current remaining processing capacity value is greater than zero, sending a synchronization message to the second interface machine and subtracting one from the current remaining processing capacity value;
the second interface machine receiving the synchronization message, judging whether a last-calculated remaining processing capacity is greater than zero, when the last-calculated remaining processing capacity is greater than zero, subtracting one from the last-calculated remaining processing capacity and writing the synchronization message into a message queue;
the second interface machine sending the synchronization message in the message queue to a processor for processing, receiving a processing result returned by the processor, and writing the processing result into the message queue;
the second interface machine updating the last-calculated remaining processing capacity, assembling a synchronization response message, and returning the synchronization response message which carries the updated last-calculated remaining processing capacity to the first interface machine;
the first interface machine modifying the current remaining processing capacity value of the second interface machine according to the last-calculated remaining processing capacity in the synchronization response message.

In an embodiment of the above method, when the second interface machine judges that the last-calculated remaining processing capacity is smaller than or equal to zero, the method further comprises: the second interface machine returning a rejection message to the first interface machine; the first interface machine receiving the rejection message, and setting the current remaining processing capacity value of the second interface machine to be zero.

The present invention also provides a system for processing a synchronization message between interfaces, the system comprises a first interface machine and a second interface machine; wherein,
the first interface machine is configured to judge whether a current remaining processing capacity value of the second interface machine is greater than zero, when the current remaining processing capacity value is greater than zero, send a synchronization message to the second interface machine and subtract one from the current remaining processing capacity value; and modify the current remaining processing capacity value of the second interface machine according to a last-calculated remaining processing capacity in a synchronization response message returned by the second interface machine;
the second interface machine is configured to receive the synchronization message, judge whether the last-calculated remaining processing capacity is greater than zero, subtract one from the last-calculated remaining processing capacity and write the synchronization message into a message queue if the last-calculated remaining processing capacity is greater than zero; send the synchronization message in the message queue to a processor for processing, receive a processing result returned by the processor, and write the processing result into the message queue; update the last-calculated remaining processing capacity, assemble the synchronization response message, and return the synchronization response message which carries the updated last-calculated remaining processing capacity to the first interface machine.

The present invention can implement the message synchronization processing according to the current remaining processing capacity by implementing dynamic flow control for the client end interface machine or the server end interface machine, thus the message synchronization and the message processing speed can be effectively matched, and the congestion or overflow of the interfaces can be prevented.

### Brief Description of the Drawings

Fig. 1 shows a message interaction flowchart between a customer relation management (CRM) and a mobile value-added service authentication centre (VAC) when the remaining processing capacity is greater than zero in accordance with an embodiment of the present invention;
Fig. 2 shows a message interaction flowchart between the CRM and the VAC when the remaining processing capacity is smaller than or equal to zero in accordance with an embodiment of the present invention;
Fig. 3 shows a flowchart for calculating the remaining processing capacity by the VAC in accordance with an embodiment of the present invention; and
Fig. 4 shows a flowchart for adding a message into a queue in a VAC interface machine in accordance with an embodiment of the present invention.

### Detailed Description of Embodiments

The embodiments of the present invention are described in details below with reference to the drawings.

The main idea of the present invention is that: as a service system has different loads at different time periods, the processing capacity of the system can be more effectively used by increasing the message processing quantity per unit time of the interface when the system has lower load, and reducing the message processing quantity per unit time of the interface when the system has higher load. i.e., the congestion or overflow of interfaces caused by unmatched processing speeds can be prevented via an excellent flow control mechanism.

The present invention is suitable for data synchronization between two synchronization interfaces which need dynamic flow control. The embodiments of the present invention are described below by taking user data message synchronization interfaces as an example. It should be noted that, these embodiments are only used for conveniently describing, but not for limiting the present invention. The flow control of the embodiments of the present invention is irrelevant to the specific service content transferred between the interfaces.

In the user data message synchronization interface, both ends of the interface are respectively a CRM interface machine and a VAC interface machine. The CRM interface machine sends a user data synchronization message to the VAC interface machine; the VAC interface machine triggers a corresponding service processing logic of the user data synchronization according to the synchronization message, and returns a service processing result to the CRM interface machine in the mode of user data synchronization response message. As the VAC interface machine needs to check the data, store the data, trigger the data synchronization service flow and the like when processing the user data synchronization message, it needs a certain time to process. The processing time of each user data synchronization message is related to the load of the VAC interface machine. When the VAC has high load, the message processing speed of the VAC interface machine will be reduced, and now, if the CRM interface machine still continues to send the user data synchronization message according to a normal speed, the congestion of VAC interface can be possibly generated.

In an embodiment of the present invention, the flow control mechanism is mainly composed of three parts: a flow control message, estimation of a processing capacity of the VAC interface machine and message sending rules of the CRM interface machine.

The flow control message comprises messages as follows.

A response message: a user data synchronization response message, which is sent from the VAC interface machine to the CRM interface machine, carries remaining processing capacity information of the VAC interface machine.

A rejection message: after the processing capacity of the VAC interface machine has full load, if the VAC interface machine still receives user data synchronization messages sent from the CRM interface machine, the VAC interface machine directly responds the rejection message. The CRM interface machine needs to resend the rejected user data synchronization message.

The estimation of the processing capacity of the VAC interface machine is described as follows.

A message queue of the VAC interface machine, the contents recorded in the message queue are as follows: a message serial number, a message arrival time (accurate to millisecond), time of returning the response message to the CRM (accurate to millisecond).

Parameters configured for the message queue are described as follows.
1. A message queue length QLen, for measuring the number of the messages in the message queue;
2. A maximum unprocessed capacity MaxUnproceedTime, the product quantity of a message processing time and the number of the messages, is used for setting computer resources which are allocated to the interface machine process, the greater the value is, the more the computer resources which can be occupied by the interface machine process are.
3. A processing time weighting of the processed message: A (0<A<1). The processing time of the processed message, as the accurate processing time of the message, refers to the processing time of the message whose response has been returned, while the waiting time refers to the waiting time of the message whose response has not been returned, therefore, the actual processing time of the waited message must be longer than the waiting time, thus the difference needs to be reflected via weighting.
4. A minimum unprocessed queue length MinQLen, the setting of the minimum unprocessed queue length is mainly to prevent resisting the CRM to send a new user data synchronization message as the processing capacity estimated value is too small caused by individual overlong message processing time. After the minimum unprocessed queue length is set, once the number of unprocessed messages of the VAC is smaller than the value, the CRM can be allowed to send the user data synchronization message.
5. A maximum unprocessed message queue length MaxQLen, the setting of the maximum unprocessed message queue length is mainly to prevent possible queue overflow caused by the calculated overlarge VAC remaining processing capacity. MaxQLen is smaller than QLen.
6. A time interval for recalculating the VAC remaining processing capacity RInterval, when the value obtained by subtracting the time for recently calculating the remaining processing capacity LastCalTime from the current system time is greater than the recalculating time interval RInterval, the VAC recalculates the remaining processing capacity. In order to avoid the resource consumption caused by frequently calculating the remaining processing capacity, the time interval for recalculating the remaining processing capacity RInterval can be configured according to actual requirements.
7. A last-calculated remaining processing capacity LastCap: the last-calculated VAC remaining processing capacity.
8. A time for last-calculating the remaining processing capacity LastCalTime (accurate to millisecond): the time for last-calculating the VAC remaining processing capacity.

Continue describing the estimation of the VAC processing capacity as follows.

Average processing time of the messages whose responses have been returned AvgProceedTime: the average processing time of the messages, whose responses have been returned, in the message queue.

Average waiting time of the unprocessed messages AvgWaitTime: the average time for waiting to process the unprocessed messages in the message queue.

Remaining processing capacity: MaxUnproceedTime /((AvgProceedTimexA +(2-A)x AvgWaitTime)/2) ― the number of the messages whose responses have not been returned, and round-off the result. If the calculated value is smaller than the value obtained by subtracting the number of the messages whose responses have not been returned from the minimum unprocessed queue length, taking the value obtained by subtracting the number of the messages whose responses have not been returned from the minimum unprocessed queue length as the remaining processing capacity, so as to prevent the overlong processing time of individual message from influencing the interface machine to process other messages.

CRM message sending rules are described as follows:
a variable: VAC remaining processing capacity N, namely, a current remaining processing capacity value of the VAC interface machine, is set;
each time when receiving a user data synchronization response message of the VAC, the VAC remaining processing capacity in the message is written into N;
a synchronization message can be sent when N is greater than 0, and each time when sending one synchronization message, 1 is subtracted from N;
N is set to be zero after receiving a rejection message from the VAC.

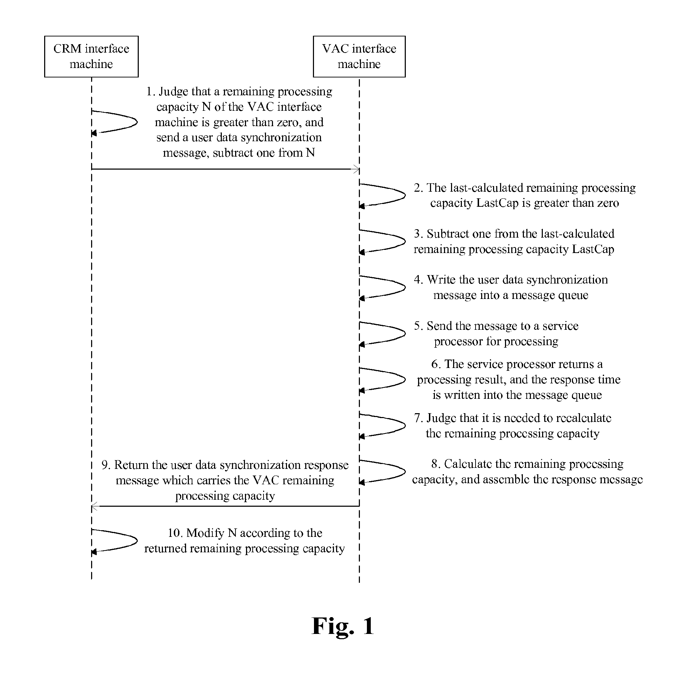

As shown in Fig. 1, the message interaction flow between the CRM interface machine and the VAC interface machine when the VAC remaining processing capacity is greater than 0 comprises the contents as follows.
1. The CRM interface machine judges that the current remaining processing capacity N of the VAC interface machine is greater than 0, subtracts 1 from N, and sends a user data synchronization message to the VAC interface machine.
2. The VAC interface machine receives the message, and judges that a last-calculated remaining processing capacity LastCap is greater than 0.
3. The VAC interface machine subtracts 1 from the last-calculated remaining processing capacity LastCap.
4. The VAC interface machine writes the received user data synchronization message into a message queue.
5. The VAC interface machine sends the user data synchronization message to a VAC service processor for service processing.
6. The VAC service processor returns a processing result, and the VAC interface machine writes a response time into the message queue.
7. The VAC interface machine compares whether the difference between the current system time and the time for last-calculating the remaining processing capacity LastCalTime is greater than the preset time interval RInterval, so as to judge whether it is needed to recalculate the remaining processing capacity.
8. If it is needed to recalculate the remaining processing capacity, the remaining processing capacity is calculated, and the calculation result and the current time are respectively written into the last-calculated remaining processing capacity LastCap and the time for last-calculating the remaining processing capacity LastCalTime;
   if it is not needed to recalculate the remaining processing capacity, 1 is added to the last-calculated remaining processing capacity LastCap;
   the VAC interface machine assembles a user data synchronization response message which carries the last-calculated remaining processing capacity LastCap.
9. The VAC interface machine returns the user data synchronization response message which carries the remaining processing capacity of the VAC interface machine to the CRM interface machine.
10. The CRM interface machine modifies the value of N according to the remaining processing capacity returned by the VAC.

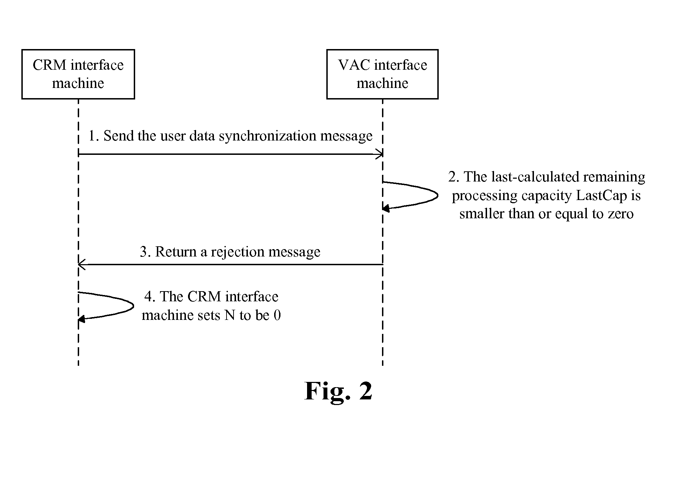

As shown in Fig. 2, when the remaining processing capacity of the VAC is smaller than 0, the message interaction flow between the CRM interface machine and the VAC interface machine comprises the contents as follows.
1. The CRM interface machine sends a user data synchronization message.
2. The VAC interface machine judges that the last-calculated remaining processing capacity LastCap is smaller than or equal to 0.
3. The VAC interface machine returns a rejection message.
4. The CRM interface machine sets the value of N to be 0, and puts the rejected user data synchronization message into a resending queue to wait for resending.

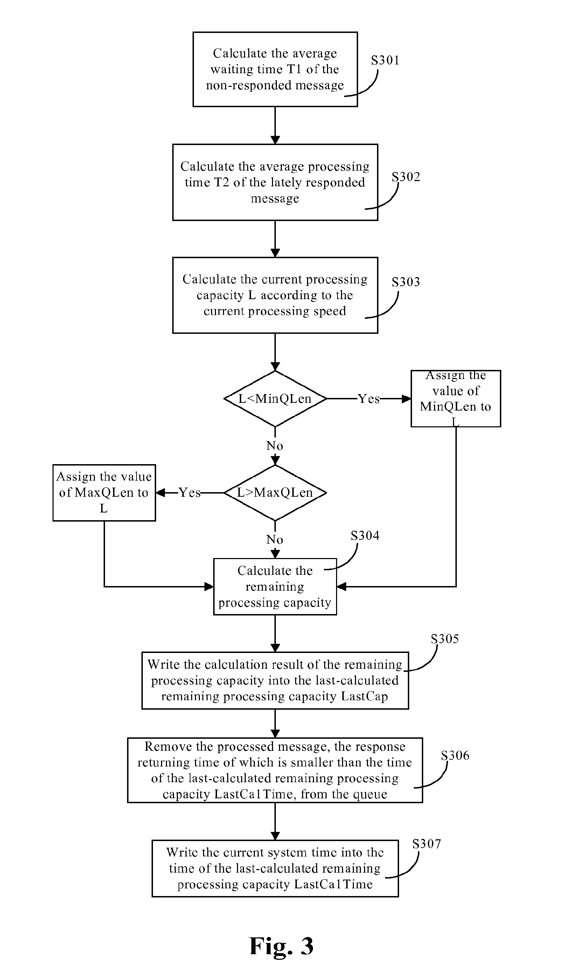

As shown in Fig. 3, the flow for calculating the remaining processing capacity by the VAC interface machine mainly comprises the steps as follows.

Step S301: an average waiting time T1 of the messages whose responses are not returned (namely, unprocessed message) is calculated, wherein T1 is equal to the value obtained by dividing Sum (the current system time ― the message receiving time) by the number of unprocessed messages.

Here, this step specifically comprises:
Step S3011: all the messages whose responses are not returned are traversed in the message queue;
Step S3012: for each message whose response is not returned, the waiting time is equal to the value obtained by subtracting the message receiving time from the current system time;
Step S3013: the total waiting time length of the messages whose responses are not returned are accumulated, and the average waiting time T1 is calculated by dividing the total waiting time length by the number of the unprocessed messages.
Step S302: the average processing time T2 of the responded messages (namely, processed messages) whose responses have been returned lately is calculated, wherein T2 is equal to the value obtained by dividing Sum (response returning time ― message receiving time) by the number of processed messages.

Here, this step specifically comprises:
Step S3021: all the messages whose responses have been returned are traversed in the message queue;
Step S3022: for each message whose response has been returned, the processing time is equal to the value obtained by subtracting the message receiving time from the response returning time;
Step S3023: the total message processing time is accumulated, and the average processing time T2 is calculated by dividing the total message processing time by the number of processed messages.
Step S303: the current processing capacity is calculated according to the current processing speed, wherein the current processing capacity L is equal to L=MaxUnproceedTime×2/((A×T2)+(2-A)×T1).

In the above, the effect of A is to weight the average waiting time T1 and the average processing time T2. The weighting of the average waiting time T1 is generally greater than the weighting of the average processing time T2, so the value of A is generally smaller than 1.

If the calculated current processing capacity L is smaller than the minimum unprocessed queue length MinQLen, then the minimum unprocessed queue length MinQLen is taken as the current processing capacity of the system, so as to prevent influencing the calculation of the current processing capacity as the processing time of part of the messages is overlong due to database lock.

If the calculated current processing capacity L is greater than the maximum unprocessed queue length MaxQLen, the maximum unprocessed queue length MaxQLen is taken as the current processing capacity of the system, so as to prevent overflow of the message queue because the calculated processing capacity is overlarge.

Step S304, the remaining processing capacity of the VAC interface machine is obtained by subtracting the number of the messages whose responses are not returned from the current processing capacity L. If the remaining processing capacity is smaller than 0, the remaining processing capacity takes 0. Namely, the remaining processing capacity is equal to max (L ― the length of queue to be processed), 0).

Step S305: the newly calculated remaining processing capacity is written into the last-calculated remaining processing capacity LastCap.

Step S306: the processed message, whose response has been returned and the response returning time of which is smaller than the time for last-calculating the remaining processing capacity LastCalTime, is removed from the queue.

Step S307: the current system time is written into the time for last-calculating the remaining processing capacity LastCalTime.

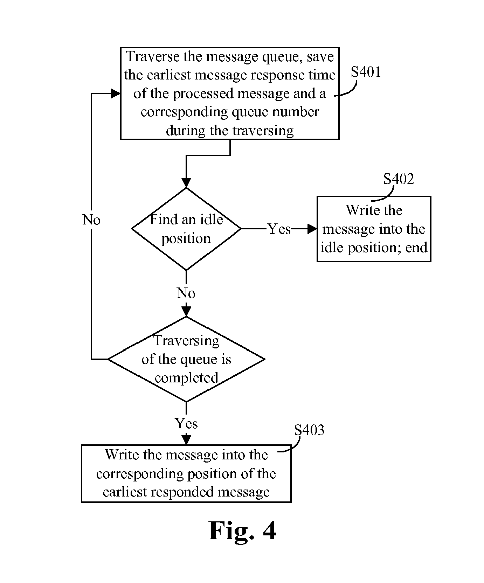

As shown in Fig. 4, the flow for putting the message of the VAC interface machine into the message queue comprises the steps as follows.

Step S401: the message queue is traversed, and during the traversing, the earliest response time of the processed messages whose responses have been returned and a corresponding queue position (or named as queue number) are saved.

Step S402: when finding an idle positions in the queue, the message is written in the idle position, and the current flow is ended; the queue is traversed when there is no idle position in the queue, and transfer to implement Step S401 when the queue is not completely traversed; implement Step S403 when the queue is completely traversed.

Step S403: when no idle position is found after the queue is completely traversed, the message is written into the corresponding position of the earliest responded message with the earliest response returning time to cover the message.

The CRM interface machine can be called as the client end interface machine, and the VAC interface machine can be called as the server end interface machine, so as to indicate that the service processing (VAC service processor) is implemented on the side of the VAC interface machine. However, in order to prevent misunderstanding, wider definitions can be adopted, for example, a first interface machine and a second interface machine, so as to indicate that the above mentioned flow control can be widely applied between two systems with interfaces, without being limited by the interface type. As long as data synchronization is needed between the two systems, and one of the systems needs to implement data processing during the data synchronization, the method provided by the embodiments of the present invention can be applied to realize matching between the data processing and data synchronization, so as to prevent the interfaces between the two systems from congestion or overflow.

In accordance with the present invention, dynamic flow control is performed between the interfaces. The remaining processing capacity of the message processing system on one side of the interface is effectively calculated, and the corresponding message synchronization control is and implemented according to the remaining processing capacity, thereby effectively realizing the matching between the message synchronization speed and the message processing speed of the interfaces, and preventing the interfaces from congestion or overflow.

The above is the further detailed description of the present invention with reference to the preferable embodiments, only for taking examples for the convenience of understanding, but not intended to limit the embodiments of the present invention. For those skilled in the art, any modifications and equivalent replacements and the like within the conception of the present invention shall fall within the scope of protection of the present invention.

## Claims

1. A method for processing a synchronization message of a client end interface machine, **characterized by** comprising:
setting a current remaining processing capacity value of a server end interface machine; each time when receiving a synchronization response message returned by the server end interface machine, writing a remaining processing capacity of the server end interface machine carried in the synchronization response message into the current remaining processing capacity value of the server end interface machine; when receiving a rejection message from the server end interface machine, setting the current remaining processing capacity value of the server end interface machine to be zero;
when the current remaining processing capacity value of the server end interface machine is greater than zero, the client end interface machine sending a synchronization message to the server end interface machine, and subtracting one from the current remaining processing capacity value of the server end interface machine.

2. The method according to claim 1, **characterized in that** the method further comprises: the client end interface machine putting the synchronization message being rejected into a resending queue to wait for resending.

3. A client end interface machine, **characterized in that** the client end interface machine comprises a server end interface machine current remaining processing capacity value setting module and a synchronization message sending module; wherein,
the server end interface machine current remaining processing capacity value setting module is configured to write, each time when receiving a synchronization response message returned by the server end interface machine, a remaining processing capacity of the server end interface machine carried in the synchronization response message into a current remaining processing capacity value of the server end interface machine, and set the current remaining processing capacity value of the server end interface machine to be zero when receiving a rejection message from the server end interface machine;
the synchronization message sending module is configured to, when the current remaining processing capacity value of the server end interface machine is greater than one, send a synchronization message to the server end interface machine and subtract one from the current remaining processing capacity value of the server end interface machine.

4. A method for processing a synchronization message of a server end interface machine, **characterized by** comprising:
judging, when receiving a synchronization message from the client end interface machine, whether a last-calculated remaining processing capacity is greater than zero; if the last-calculated remaining processing capacity is greater than zero, subtracting one from the last-calculated remaining processing capacity, and writing the received synchronization message into a message queue; otherwise, the server end interface machine returning a rejection message to the client end interface machine;
sending the synchronization message in the message queue to a service processor for processing, and writing a processing result returned by the service processor into the message queue; updating the last-calculated remaining processing capacity, and returning a synchronization response message which carries the updated last-calculated remaining processing capacity to the client end interface machine.

5. The method according to claim 4, **characterized in that** the step of writing the received synchronization message into the message queue comprises:
traversing the message queue, recording, during the traversing, a minimum message response time of a processed message and a queue position corresponding to the processed message;
writing, when finding that there exists an idle position in the message queue, the received synchronization message into the idle position, and ending a current flow;
if no idle position is found after completing the traversing of the message queue, writing the received synchronization message into the queue position corresponding to the processed message with the minimum message response time.

6. The method according to claim 4, **characterized in that** the step of updating the last-calculated remaining processing capacity comprises:
judging whether it is needed to recalculate the remaining processing capacity according to whether a difference between a current system time and a time of the last-calculated remaining processing capacity is greater than a preset time interval;
if the difference is greater than the preset time interval, judging that it is needed to recalculate the remaining processing capacity, then recalculating the remaining processing capacity, taking the recalculated remaining processing capacity as the updated last-calculated remaining processing capacity, and updating the time of the last-calculated remaining processing capacity as the current system time;
if the difference is smaller than or equal to the preset time interval, judging that it is not needed to recalculate the remaining processing capacity, and adding one to the last-calculated remaining processing capacity as the updated last-calculated remaining processing capacity.

7. The method according to any one of claims 4 to 6, **characterized in that** the step of calculating the remaining processing capacity comprises:
calculating an average waiting time and an average processing time, wherein, the average waiting time is obtained by dividing a total waiting time of messages whose responses are not returned by the number of the messages whose responses are not returned; and the average processing time is obtained by dividing a total processing time of messages whose responses are returned by the number of the messages whose responses are returned;
according to L=MaxUnproceedTimex2/(A×T2+ (2-A) ×T1), calculating a current processing capacity; wherein L is the current processing capacity, MaxUnproceedTime is a maximum unprocessed capacity, T1 is the average waiting time, T2 is the average processing time, and A is a weighted value of the average waiting time and the average processing time;
acquiring the remaining processing capacity according to the difference between the current processing capacity and the number of the messages whose responses are not returned.

8. The method according to claim 7, **characterized in that** when calculating the current processing capacity, the method further comprises: setting a minimum unprocessed queue length;
setting the current processing capacity to be the minimum unprocessed queue length when the current processing capacity is smaller than the minimum unprocessed queue length.

9. The method according to claim 8, **characterized in that** when calculating the current processing capacity, the method further comprises: setting a maximum unprocessed queue length;
setting the current processing capacity to be the maximum unprocessed queue length when the current processing capacity is greater than the maximum unprocessed queue length.

10. A server end interface machine, **characterized in that** the server end interface machine comprises a remaining processing capacity handling module and a synchronization response message sending module, wherein,
the remaining processing capacity handling module is configured to judge whether a last-calculated remaining processing capacity is greater than zero when receiving the synchronization message from a client end interface machine; when the last-calculated remaining processing capacity is greater than zero, subtract one from the last-calculated remaining processing capacity and write the received synchronization message into a message queue; when the last-calculated remaining processing capacity is smaller than or equal to zero, return a rejection message to the client end interface machine;
the synchronization response message sending module is configured to send the synchronization message in the message queue to a service processor for processing, and write a processing result returned by the service processor into the message queue, update the last-calculated remaining processing capacity, and return a synchronization response message which carries the updated last-calculated remaining processing capacity to the client end interface machine.

11. A method for processing a synchronization message between interfaces, **characterized in that** the method comprises:
a first interface machine judging whether a current remaining processing capacity value of a second interface machine is greater than zero, when the current remaining processing capacity value is greater than zero, sending a synchronization message to the second interface machine and subtracting one from the current remaining processing capacity value;
the second interface machine receiving the synchronization message, judging whether a last-calculated remaining processing capacity is greater than zero, when the last-calculated remaining processing capacity is greater than zero, subtracting one from the last-calculated remaining processing capacity and writing the synchronization message into a message queue;
the second interface machine sending the synchronization message in the message queue to a processor for processing, receiving a processing result returned by the processor, and writing the processing result into the message queue;
the second interface machine updating the last-calculated remaining processing capacity, assembling a synchronization response message, and returning the synchronization response message which carries the updated last-calculated remaining processing capacity to the first interface machine;
the first interface machine modifying the current remaining processing capacity value of the second interface machine according to the last-calculated remaining processing capacity in the synchronization response message.

12. The method according to claim 11, **characterized in that** when the second interface machine judges that the last-calculated remaining processing capacity is smaller than or equal to zero, the method further comprises: the second interface machine returning a rejection message to the first interface machine; the first interface machine receiving the rejection message, and setting the current remaining processing capacity value of the second interface machine to be zero.

13. A system for processing a synchronization message between interfaces, **characterized in that** the system comprises a first interface machine and a second interface machine; wherein,
the first interface machine is configured to judge whether a current remaining processing capacity value of the second interface machine is greater than zero, when the current remaining processing capacity value is greater than zero, send a synchronization message to the second interface machine and subtract one from the current remaining processing capacity value; and modify the current remaining processing capacity value of the second interface machine according to a last-calculated remaining processing capacity in a synchronization response message returned by the second interface machine;
the second interface machine is configured to receive the synchronization message, judge whether the last-calculated remaining processing capacity is greater than zero, subtract one from the last-calculated remaining processing capacity and write the synchronization message into a message queue if the last-calculated remaining processing capacity is greater than zero; send the synchronization message in the message queue to a processor for processing, receive a processing result returned by the processor, and write the processing result into the message queue; update the last-calculated remaining processing capacity, assemble the synchronization response message, and return the synchronization response message which carries the updated last-calculated remaining processing capacity to the first interface machine.
